# EUROPEAN PATENT SPECIFICATION

(11) **EP 4 142 125 B1**
(45) Date of publication and mention of the grant of the patent: **29.07.2026**
(21) Application number: 21382782.7
(22) Date of filing: 26.08.2021
(51) Int. Cl.: H02K 21/24, H02K 37/12, H02K 1/12, H02K 3/26, H02K 7/08, H02K 11/33, H02K 29/03, H02K 1/2795, H01F 38/14

(54) **MINIATURIZED ELECTROMAGNETIC ROTARY ACTUATOR**
MINIATURISIERTER ELEKTROMAGNETISCHER DREHANTRIEB
ACTIONNEUR ROTATIF ÉLECTROMAGNÉTIQUE MINIATURISÉ

(43) Date of publication of application: 01.03.2023
(73) Proprietor: Universidad de Alcalá (UAH), 28801 Alcalá de Henares (ES); Politechnika Warszawska (WUT), 00 661 Warszawa (PL); Fundación IMDEA Nanociencia (IMDEA), 28049 Madrid (ES)
(72) Inventor: DÍEZ JIMÉNEZ, Efrén, 28801 MADRID (ES); VALIENTE BLANCO, Ignacio, 28801 MADRID (ES); FERNÁNDEZ MUÑOZ, Miguel, 28801 MADRID (ES); VILLALBA ALUMBREROS, Gabriel, 28801 MADRID (ES); MORÓN ALGUACIL, Carlos, 28801 MADRID (ES); MARTÍNEZ PÉREZ, Alba, 28801 MADRID (ES); CRUZ ROSCO, Héctor, 28801 MADRID (ES); MARTÍNEZ ROJAS, Juan Antonio, 28801 MADRID (ES); SÁNCHEZ MONTERO, Rocío, 28801 MADRID (ES); LÓPEZ ESPÍ, Pablo Luis, 28801 MADRID (ES); PEREIRA GONZÁLEZ, Emiliano, 28801 MADRID (ES); LASTRA SEDANO, Alberto, 28801 MADRID (ES); MISSOUS, Mohamed, MANCHESTER, M17 1RW (GB); SEXTON, James, MANCHESTER, M17 1RW (GB); MUTTLAK, Saad, MANCHESTER, M17 1RW (GB); MICHALOWSKI, Marcin, 00 661 WARSZAWA (PL); KUSZNIEREWICZ, Zbigniew, 00 661 WARSZAWA (PL); BOLLERO REAL, Alberto, 28049 MADRID (ES); GRANADOS RUÍZ, Daniel, 28049 MADRID (ES); CAMARERO DE DIEGO, Julio, 28049 MADRID (ES); PALMERO RODRÍGUEZ, Ester María, 28049 MADRID (ES); NAVÍO BERNABEU, Cristina, 28049 MADRID (ES); SOLER MORALA, Jimena, 28049 MADRID (ES); RODRÍGUEZ OSORIO, Manuel, 28049 MADRID (ES); ACEBRÓN RODICIO, María, 28049 MADRID (ES); VALERA BERNAL, Andrés, 28049 MADRID (ES); FLANAGAN, Aiden, GALWAY (IE); FAWDRY, Martin, GALWAY (IE)
(74) Representative: Ungria López, Javier

(56) References cited:
- EP-A1- 3 457 529
- EP-A1- 3 595 138
- WO-A1-2012/148152
- WO-A1-2017/141412
- CN-A- 104 976 145
- GB-A- 2 034 532
- JP-A- H04 347 568
- KR-A- 20070 092 826
- US-A- 3 784 850
- US-A- 5 039 895
- US-A1- 2005 127 769
- US-A1- 2006 284 507
- US-A1- 2013 307 366
- US-A1- 2015 364 961
- US-A1- 2016 149 459
- US-A1- 2018 123 400

## Description

### TECHNICAL FIELD

The present invention relates generally to rotary actuators, and more particularly to miniaturized electromagnetic rotary actuators.

### BACKGROUND OF THE INVENTION

During surgery and catheters interventions, the smaller is the access to patients' body, the faster is the recovery time and the fewer are the complications that appear. Millimeter tools such as scissors or forceps have been widely used and developed and used during the last decades worldwide. However, still a larger number of medical invasive interventions may reduce their risk if proper miniaturized tools existed. For example, mitral regurgitation, rotational atherectomies, arrhythmia ablations, brain tumors resections or intracranial angioplasties constitute risky interventions that produce large collateral damages due to the use of too big tools that have to be externally actuated through large catheters.

Furthermore, health non-invasive inside body treatments based on mechanical or thermal intervention could in some cases replace chemical treatments when treating issues like cancer or tissue reparation. Devices like endoscopic capsules, pacemakers or insulin pumps have demonstrated for years their benefits. However, mechanical interventions are currently limited by the large size of the devices and by their mobility capacity.

What would be desirable is to have strong mechanical tools with smaller dimensions that can be used in treating patients, and in particular, a miniaturized electromagnet rotary actuator that can be used in treating patients. Several interesting electromagnetic miniaturized motors and actuators can be found in literature. In this field, there can be found two typologies: On-Printed-Circuit-Board (On-PCB) and bulk, or separable, micro-actuators. On-PCB miniaturized electromagnetic actuator refers to those devices having torque and rotation capacity but whose stator part is constructed over a PCB like presented by (Koser and Lang 2006; Waldschik and Büttgenbach 2010). They present very efficient motors, claiming for diameters close to 1 mm in the rotary elements but as they are forced to be attached to a PCB the real size will be always larger than the nominal diameter preventing its utilization in catheters and or minimally invasive health tools.

Separable, or bulk, miniaturized motors can be found in literature as for example the 1 mm diameter micromotor commercialized by Kinetron company described in patent NL9002624A and in article (Wang et al. 2014). This motor is elegant, simple and very efficient since it can operate at very high speeds. However, its torque and specific torque capacity is very reduced because it does not include iron-cores in the stator actuation coils. Similar coreless radial flux micromotors can be found in patent application JP2009247191A with similar reduced torque capacity. In this application, they claim for a coreless permanent magnet miniaturized motor connected to a gearhead to increase the total output torque. Although, the gearhead provides larger torque within the same diameter, it requires much larger length, complicating its application in meandering paths through in body vessels. In addition, it may suffer from jamming because gearhead frictions may be too large for a low torque motor actuation.

The absence of iron cores in miniaturized electromagnetic motors, lower than 1 mm diameter, can be explained by the cogging torque. This cogging torque has to be overcome by the consecutive actuation coil at each motor step. At macroscale, this is easily achieved since magnetic induction of the iron cores can be obtained with a reasonable number of coil wire turns. However, when decreasing the scale, current densities in the wires have to be much larger to achieve similar induction level, generating excessive heat and related issues. On the contrary, magnetic forces acting between iron and magnets are constant with the scale as they depend with the volume of the magnetic materials. This implies that a DC miniaturized electromagnetic permanent magnet motor would need extremely large current densities in the wires to overcome cogging torque and to make the rotor rotate into the next step position. This issue can be overcome by special electromagnetic motor topology called Vernier motor type. Vernier motors have high torque producing capability that exceeds that of a conventional electrical machine by 2-3 times (Wu and El-Refaie 2019). But the most interesting feature is that cogging torque of a Vernier motor is fairly small because it includes a flux modulator part between actuation coils and rotor magnets. The modulated stator flux and the PM flux interacts in the airgap so that the proposed machine works. This working principle is similar to the one of coaxial magnetic gears (Diez-Jimenez, Sanchez-Montero, and Martinez-Muñoz 2017).

There are two main types of Vernier electric motors radial and axial flux. For a stack construction of the motor, as proposed in this invention, the most relevant type is axial configuration. There can be found several axial flux Vernier motors in literature as for example in (Rallabandi et al. 2017; Zhang et al. 2016; Zou et al. 2017) and in patents KR920020811A, CN110676985A, CN109104059A or CN103178667A. They all present very high torque density due to the gearing effect but none of them has been developed in layers stack, which simplifies the miniaturized assembly process and none of them has such a reduced size as intended in this invention.

Powering electromagnetic motors and actuator using wireless power transfer system has been considered in previous developments for macroscale applications. For example, it has been proposed wireless induction powering of robotic arms actuators in patents US2019372341A1, JP2016129479A, CN106560981A or wireless power transfer for water pumps in patent KR102026289B1. Moreover, it has been proposed to power car electric motors as shown in CN106451818A or in article (Fujimoto and Sato 2016) and for general applications electric motors like in CN203225631U or in article (Multiple-frequency et al. 2019).

Wireless power transfer has been also considered for in body applications like for example in patent CN209593110U, where an induction coil is used to power an endoscopic capsule. Patent KR101749586B1 includes a helical coil antenna attached to a catheter. They do not claim for any rotary actuation system attached to this antenna but only uses a catheter to include a coil antenna and a simple linear magnetic coin motor.

More related to the present invention is patent application CN103083049A. In said document, invertors claim a system including wireless connected to rotary DC motor for controlling the inflation of a gastric balloon for weight-losing treatments. This patent does combine wireless with electric motor, but the whole system has an external diameter of several millimeters and a length which is several times its diameter, far from the objective of present invention. No information is given about the rotary DC electric motor topology. Besides the size itself, the main constructive difference with the present invention is that the device in constructed by connecting each different element (rotary motor, wireless power transfer, leadscrew, piston, etc...) to a large cylindrical frame getting benefit of a better structural support. The conceptual difference is that in the present invention the elements themselves conform the structure by stacking them which simplifies and reduces the construction, thus enabling miniaturization to diameter smaller than 1 mm.

Another relevant development affecting the present invention is the article (Gao and Yan 2019). This interesting and detailed article describes the construction and test of a motor-driven capsule robot for exploring the intestinal tract. The whole device measures 14 mm diameter x 46.8 mm and includes a front facing camera, an electric motor, a telemetry circuit, and a solid-cylinder three-dimensional receiving coil for wireless power induction. This device has the same type of elements than the present invention, but its construction is based on a large rigid frame where different elements are attached. This can be done since elements are millimetric scale, so it is not comparable with the claimed lay-out and size of present invention.

Other documents known from prior art are the Korean patent application KR20070092826A, disclosing a pan-cake type brushless dc motor; the European patent application EP3457529A1, disclosing a disc motor; the American application US2015/364961A1, disclosing a brushless motor; and the British patent application GB2034532A, disclosing a stepper motor and method of fabricating a stepper motor.

To sum up, according to the previous background selected, it has not been found any development nor commercial device with the characteristics and advantages effects claimed in this invention.

### SUMMARY OF THE INVENTION

The invention is set out in the appended set of claims.

### BRIEF DESCRIPTION OF THE DRAWINGS

Fig. 1 is a cross section of a preferred embodiment of the present invention showing the different elements in their stack lay-out.
Fig 2 is an exploded perspective view of the preferred embodiment of the present invention showing the different elements separately and in the corresponding assembly order.
Fig 3 is an isometric view of the preferred embodiment of the present invention with the alternative options for the receiver antenna: array of patch antennas arranged in the cylindrical outer surface (Fig 3a), array of patch antennas in stack configuration (Fig 3b), ferromagnetic coil winding (Fig 3c) as inductive link element and double helical coil antenna (Fig 3d).

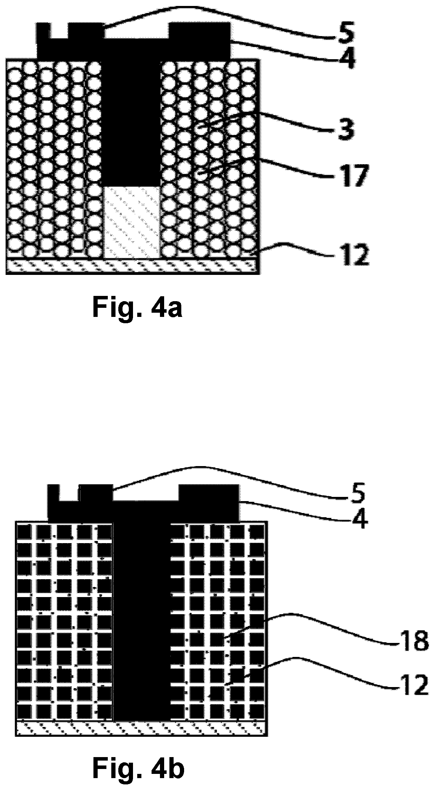

Fig 4 shows two constructions methods for actuation coils, first shown in Fig 4 - a shows typical multilayers coil winding method and Fig 4 - a shows the construction using epitaxial growth methods in axial magnetization direction.
Fig 5 shows a second embodiment, not representing the present inventior, where wireless powering system is replaced by direct tethering.
Fig 6 represents the coils activation schemed steps for the rotation of the magnetic field in the 2-phases actuation coils layer.

While the disclosure is amenable to various modifications and alternative forms, specifics thereof have been shown by way of example in the drawings and will be described in detail. It should be understood, however, that the intention is not to limit the disclosure to the particular examples described. On the contrary, the intention is to cover all modifications, equivalents, and alternatives falling within the scope of the disclosure, which is defined by the appended claims.

### DESCRIPTION

A technical problem is to provide high torque and rotation control capacity in a small and constant diameter actuator, as macroscopic robotic joints or rotary actuators, in combination with wireless powering capacity. Having a miniature rotary actuator with similar behavior to macroscopic actuators could lead to a large number of robotic arms applications, being especially useful in potential applications in health minimally invasive interventions.

A robotic joint or rotary actuator is typically made by a motor-reducer which is, in the macroscale, an electromechanical device composed of an electric motor (AC or DC) that provides power to a gearhead. The speed provided by the electric motor can be very high (> 100.000 rpm). The output torque of an electric motor is not usually high, thus it is needed to use a gearhead stage to multiply torque and reach useful mechanical performance. In the macro-scale there are many examples of motor-reducers, but not so much in the micro-scale. The smallest electric motor found in literature is a 1 mm diameter system, which is still large and does not contain any gearhead. This absence of any previous micro-robotic joint developments is explained since there are many critical physical and technological issues like assembly, structure, multipolar magnetization and micro-integration that inhibit their creation using conventional methods.

On the other hand, integrated circuit fabrication processing has shown excellent results in the microelectronics industry, which in a general sense stacks various layers to produce a desired device. It has been found that a "layer stacking" approach is useful to construct a miniaturized rotary actuator.

A miniaturized rotary actuator includes a stator element, one or more high-frequency power receiving antennas, a rectifier and power conditioning circuit, a plurality of actuation coils, a magnetic flux modulator, and a rotary element (e.g. rotor) including a shaft, permanent magnet with multipolar axial magnetization, and bearing balls and corresponding bearing tracks. The construction of this example actuator is oriented to assure and maintain a constant outer diameter while keeping a high torque and efficiency. Assembling this example miniaturized rotary actuator includes stacking different layers with different functions to produce the desired miniaturized rotary actuator. The term "layer" can include a plurality of different sub-components. For example, the plurality of actuation coils (3) may be encapsulated in an epoxy filler, collectively forming a stator "layer" (12). Likewise, the rectifier and power conditioning circuit can be provided in a circuit module forming a "layer", which is then stacked with the stator layer and/or one or more intervening "layers" as desired. These are just examples.

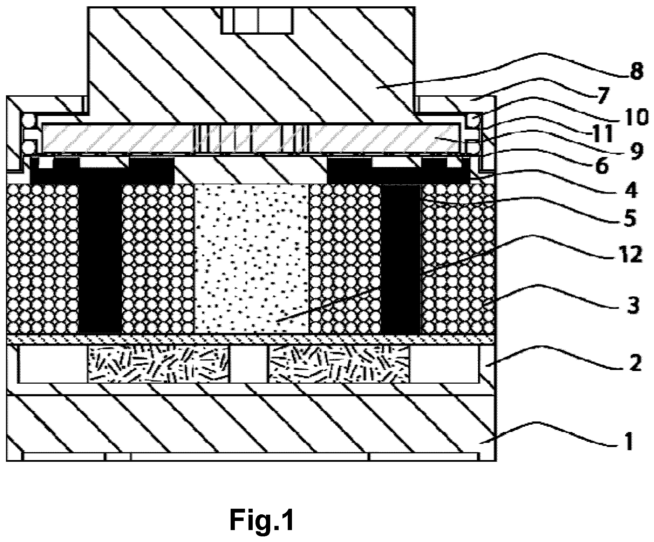

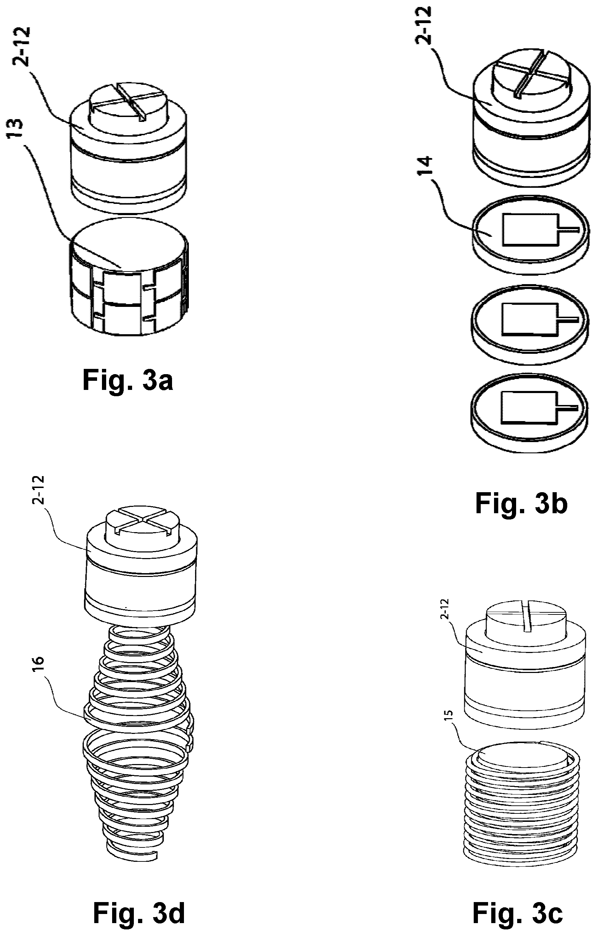

Wireless powering of the example actuator is done through a radiative link using high-frequency receiver antennas. The antenna is energized by using another larger antenna controlled externally. Both are tuned to resonate in the same frequency range, so the efficiency of the link is maximized. Different receiver antennas can be considered including, for example, a single unbalanced patch antenna, as shown in figure 1, an array of patch antennas arranged in on a cylindrical outer surface (e.g. on external frame (7)), and/or an array of patch antennas in stack configuration. In some cases, an inductive link may be used by adding a ferromagnetic coil winding instead of or in addition to the patch antenna. These alternative antennas options are shown in figure 3.

The type of antenna depends on the selected resonant frequency. Patch antennas of this small size are most useful in the range of 1 to 10 GHz, while an inductive link antenna may operate most efficiently in the range between 0.1 and 1000 MHz. In some cases, the optimal selection of the antenna will depend on the expected depth and/or location of the intended use of the example actuator in body application since different frequencies are absorbed differently by the body tissue.

Electromagnetic absorption is a significant issue when miniaturizing wireless power transfer systems for in-body applications. Size of the receiver antenna often directly effects the working resonant frequency of the antenna. Typically, the smaller the receiver antenna, the higher the resonant frequency must be to produce a high efficiency power link. However, the absorption of the electromagnetic energy varies with the frequency and the affected tissue. For the intended working frequency ranges, absorption may be almost negligible between 0.1 to about 500 MHz having penetration depths of tens of cm. Penetration depths start to decrease with frequency, and with a frequency at about 1 GHz the penetration depth may be only about 1 mm. With a frequency of about 10 GHz, the penetration depth may be reduced to practically zero.

Because of this limitation and depending on the selected antenna, two different wireless energy reception schemes are preferred: continuous high power reception or accumulative low power reception. In continuous high-power reception, the energy is directly and continuously used to power to the actuation coils of the actuator through rectifier and control microelectronic circuit. Although not required, the rectifier and control microelectronic circuit may be fabricated on an integrated circuit die that is mounted (e.g. stacked) to a stacked stator assembly. In the continuous high power reception mode, the example actuator can operate continuously and so it can have both high torque and high speed, therefore high power. In the accumulative low power reception mode, the energy received by the antenna is rectified to a DC signal which is then used to charge a relatively high capacity capacitor. The energy accumulated in the capacitor is released, such as once it is fully charged, to power the actuator. In one example, the periods of charging and discharging the capacitor are controlled by two different microelectronic circuits allowing a slower charge mode and a faster discharging mode. In this way, the example actuator may have an available high-power level for its motion but only during a reduced time. For small-angle controlled actuations, there may be no need of continuous high speed, so even in cases where the efficiency link is relatively low, the actuator can still be useful.

The energy available from the antenna, in continuous or accumulative mode, is conditioned and transformed in order to create a rotational inducing magnetic field in the actuation coils. The actuation coils must be activated with a certain delay between them depending on the number of phases of the rotary electromagnetic actuator. For a preferred embodiment, there are 4 axial arranged actuation coils connected in 2 phases scheme. Thus, the activation of the actuation coils is done with a 90 degrees delay (or phase shift) if a sinusoidal activation signal is considered, or in steps if a multiple-on-off-step synchronized activation signal is considered as usual in stepper or brushless DC permanent magnet motors.

In some cases, the actuation coils include high saturation ferromagnetic cores to increase the total and the specific torque capacity of the electromagnetic actuator. Such coils may need higher inducing currents to overcome cogging torque. Cogging torque of electrical motors is the torque due to the interaction between the permanent magnets of the rotor and the stator. This cogging torque has to be overcome by the consecutive actuation coil at each motor step. At macroscale, this is easily achieved since magnetic induction of the iron cores of the stator can be obtained with a reasonable number of coil wire turns and a large current density in the wires where proper heat removal elements can be considered. However, when decreasing the scale of the motor, current densities in the wires would need to be much larger to achieve similar induction level, generating excessive heat and related issues. Magnetic forces acting between iron and magnets are constant with the scale as they depend on the volume of the magnetic materials. This implies that a simple miniaturized electromagnetic permanent magnet motor would need extremely large current densities in the wires to overcome cogging torque and to make the rotor rotate into the next step position.

In a preferred embodiment, a Vernier motors design is used to help overcome some of these cogging torque issues. Vernier type motors have high torque producing capability that exceeds that of a conventional electrical machine by 2-3 times. But the most interesting feature is that cogging torque of a Vernier motor is fairly small because it includes a flux modulator part between the actuation coils of the stator and the rotor magnets. The flux modulators give the motor a gearing effect that increases the torque and permits the motor to overcome the cogging torque with lower current densities in the actuation coils.

The magnetic flux is modulated between the actuation coils and rotor magnets pole-pairs. In the example actuator, a stator layer extends in a thickness direction between a top side and an opposing bottom side. The stator layer is configured to include the plurality of electromagnetic actuation coils spaced axially around an axis of rotation of a rotor with each oriented in the thickness direction. A magnetic flux modulator layer with a plurality of flux modulator teeth is arranged axially around the axis of rotation of the rotor. The magnetic flux modulator layer is stacked with and fixed relative to the stator layer to form a stacked stator assembly. The rotor is aligned with the stator layer, and includes a permanent magnet layer with alternating multipolar magnetizations arranged axially around the axis of rotation of the rotor. In this example, the rotor is stacked on the stacked stator assembly and configured to rotate relative to the stacked stator assembly.

The actuation coils of the stacked stator assembly produce a number of pole-pairs (ps). The pole pairs are modulated by a certain number of stator teeth (ns) included in the magnetic flux modulator layer of the stacked stator assembly. The difference (ps - ns) of the pole-pairs harmonic becomes the main flux component, which is set to equal the rotor pole-pairs number (pr) of the permanent magnet layer of the rotor.

The modulated stator flux and the permanent magnet flux interact in the intervening airgap to turn the rotor. There is a gearing effect between rotation of the rotor and rotation of the magnetic field in the actuation coils, typically reducing the speed and hence, multiplying torque in a reduction ratio factor Gr. This reduction ratio can be calculated as Gr = (ns - pr) / pr. In the preferred embodiment these numbers are ns = 12, pr = 11 and ps = 1.

The rotor in the example actuator includes a permanent magnet layer/disc with multipolar axial magnetization. The aspect ratio of diameter to thickness of the disc is selected as a trade-off of having enough thickness to provide magnetic forces and being thin enough to be easily magnetizable in multipolar configuration. In addition, thickness is preferably in the same order of the flux modulator teeth of the magnetic flux modulator layer of the stacked stator assembly. A very thick permanent magnet layer of the rotor will tend to make negligible the flux modulation acting directly against the actuation coils, and not against the flux modulator teeth, and consequently increasing relative cogging torque. In a second example, the permanent magnet layer can be constructed by replacing those permanent magnets with north or south magnetization direction by ferromagnetic pole pieces. This simplifies the magnetization process since a pulsed single direction magnetization is enough to magnetize the permanent magnet layer.

The permanent magnet layer is attached (stacked) to the rotor. The rotor can be made of ferromagnetic material to act as a back yoke of permanent magnet pole-pairs, but it is suggested to use a mid or low magnetic saturation material to help reduce magnetic force imbalances. The rotor is held in position with respect to the flux modulator in a parallel and uniform way, reducing the airgap between the flux modulator teeth and the permanent magnet layer as much as possible.

In the invention, the rotor with the permanent magnet layer is sustained over the flux modulator teeth through precision balls and bearings tracks. The use of ball bearings makes the manufacturing and assembly process more complex. However, they provide a friction coefficient orders of magnitude lower than some other type of bearings used in miniature devices like jewel bearings or bushings used in precision watch mechanisms. A jewel bearing provides a friction coefficient of around 0.1-0.15 while ball bearings typically reduces it to 0.01-0.03, depending on the selected materials for the ball and bearings tracks. The magnetic configuration of the preferred embodiment, made by a single stator and single rotor permanent magnet, generates relatively large axial attractive forces between the stator and the rotor, and so it is desirable to reduce the friction coefficient in the bearings in order to deliver an effective output torque. When using some jewel or other bearings with larger friction coefficients, the motor may rotate at very high speed, but the effective torque capacity would be reduced.

In the preferred embodiment, the rotor assembly is covered by an external cylindrical frame that is configured to acts as a counter bearing tracks for axial and radial loads in opposite directions, but also as a sealing mechanism to help prevent entry of external particles and/or fluids.

The preferred embodiment is shown in figures 1, cross section view, and 2, exploded view. The embodiment comprises two main components: a stacked stator assembly and a rotor. In some cases, the stacked stator assembly is built by stacking layers of different subsystems including a plurality of electromagnetic actuation coils spaced axially around an axis of rotation of a rotor each oriented in the thickness direction of the stator layer.

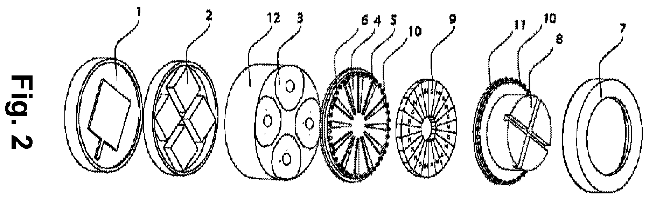

A first layer shown in Figures 1 and 2 is the patch antenna (1) that is used to gather energy for powering the actuator, sometime gathering energy at different frequencies. This antenna (1) can be constructed in any of a number of different topologies, some of which are shown in figure 3. As shown in Figure 3, the antenna (1) can include an array of patch antennas arranged in a cylindrical outer surface (13) of an external frame (see Figure 3(a)), an array of patch antennas in a stack configuration (14) (see Figure 3(b)), a ferromagnetic coil winding (15) arranged as an inductive link element (see Figure 3(c)), and a double helical coil antenna (16)(see Figure 3(d)). Depending on the expected depth of use in the body, one antenna may be selected against the others.

The second layer (2) in Figures 1 and 2 includes rectifier and power conditioning electronics circuit layer (2). This electronic layer has several functional blocks. A first block is a matching circuit, which in some cases includes an RLC circuit between the rectifier and the antenna in order to match the resonant frequency of the antenna with the resonant frequency of the rest of the circuit. A second block includes a rectifier circuit, which is typically done by diodes in half or full bridge configuration. Once the energy is available as a DC signal, the energy can be directly distributed to the actuation coils (continuous high power operation) or stored in a capacitor waiting to be released (accumulative low power). In continuous high-power operation, the energy is directly and continuously used to properly power to actuation coils (3) through a control microelectronic circuit using pulses or a sinusoidal inverter. In accumulative low power operation, the DC signal is used to charge a relatively large volume capacitor. The energy accumulated in the capacitor is released to operator the actuator, such as once the capacitor is fully charged. In some examples, the periods of charging and discharging the capacitor are controlled by two different microelectronics circuits allowing a slower charge mode and a faster discharging mode. Therefore, a third block of layer (2) may include control and distribution transistors and/or capacitors. In some cases, parts of or all the second layer (2) in Figures 1 and 2 may be formed on an integrated circuit die that is then mounted (e.g. stacked) to the stacked stator assembly.

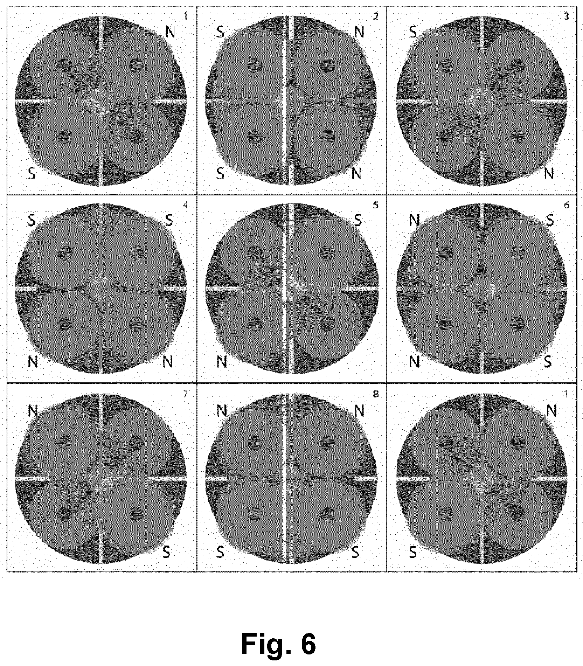

Third element in Figures 1 and 2 includes a stator layer. The stator layer extending in a thickness direction between a top side (facing to the right in Figure 2) and an opposing bottom side (facing to the left in Figure 2). The stator layer is configured to include a plurality of electromagnetic actuation coils spaced axially around an axis of rotation of a rotor (8) with each oriented in the thickness direction. The electromagnetic actuation coils (3) may be encapsulated by an epoxy filler to makeup the stator layer (12). In this preferred embodiment, the stator layer includes four actuation coils connected in two phases. Opposite coils belong to the same phase. By using two phases, the total magnetic field generated by the four coils can be accurately controlled and rotated around the axis of rotation axis of the rotor, as shown in figure 6.

The windings of the actuation coils can be done using any usable approach. A first approach is to create a multilayer coil winding (17) using common winding machines customized for such small dimensions. The second approach is done using integrated circuit processing techniques, e.g. each of the plurality of electromagnetic actuation coils of the stator layer may include a plurality of stacked planar conductive loops (18) each formed on a separately deposited insulating layer and interconnected to at least one adjacent conductive loop through one or more VIAS formed through an intervening insulating layer.

In the example shown in Figure 2, the rotating magnetic flux from the actuation coils (3) is modulated using a magnetic flux modulator layer (4) with a plurality of flux modulator teeth (5) arranged axially around the axis of rotation of the rotor (8). The magnetic flux modulator layer (4) is stacked with and fixed relative to the stator layer (12) to form a stacked stator assembly.

The stacked stator assembly is made with a certain number of pole-pairs (ps), which is modulated by a certain number of stator teeth (ns) included in the magnetic flux modulator layer (4). The difference (ps - ns) in pole-pairs harmonic becomes the main flux component, which may equal the pole-pairs number (pr) of the permanent magnet layer (9) with alternating multipolar magnetizations of the rotor. There is a gearing effect between rotation of the rotor (8) and rotation of the magnetic field in the actuation coils (3), typically reducing the speed and hence, multiplying torque in a reduction ratio factor Gr. This reduction ratio can be calculated as Gr = (ns - pr) / pr. In the preferred embodiment, these numbers are ns = 12, pr = 11 and ps = 1. The magnetic flux modulator layer (4) helps reduce the cogging torque occurring when the rotor (8) goes from one step angle to another.

The magnetic flux modulator layer (4) includes a rigid frame acting as a bearing track (6). The bearing track (6) may be coated with high hardness and low shear resistance materials reducing the friction coefficient between bearings ball (10) and the bearing track (6). An external cylindrical frame (7) is used to close the bearing tracks laterally. There are two contact ball bearing tracks, one between bearing track (6) and rotor (8), closed laterally by the cylindrical frame (7). A second contact bearing track is provided between the rotor and its bearing tracks (11), closed laterally and axially by the cylindrical frame (7). The bearing tracks (6) and (11) may be L-shape to simply manufacturing, and then closed by adjacent components to maintain the ball bearings within each track.

The invention also includes a rotor (8). The rotor (8) is aligned with the stator layer (12) and includes a permanent magnet layer (9) with alternating multipolar magnetizations arranged axially around the axis of rotation of the rotor (8). In a second example, the permanent magnet layer may include permanent magnets with single direction of magnetization with separating ferromagnetic pole pieces. During assembly, the rotor (8) is stacked on the stacked stator assembly and configured to rotate relative to the stacked stator assembly.

The permanent magnet layer (9) is polarized in order to have the number of pole-pairs necessary for the gearing effect, as described previously. In the preferred embodiment, the number is pr = 11. The aspect ratio of the pole pitch with respect to the thickness of the permanent magnet layer (9) is preferably less than one (1) to help with proper magnetization of the pole-pairs of the permanent magnet layer (9). Thinner pole pairs may be more difficult to completely magnetize in alternative direction. For the second example, having single direction of magnetization, the magnetization process is much simpler and straightforward.

In the invention, the bearings include bearing tracks with balls designed to simplify the assembly process. The bearing tracks (11) are shown manufactured in the rotor (8) as a simple perpendicular "L" shaped section. The counter tracks are not manufactured in the stator part, but they are simply made by the shape of the stator parts (6) and (7). The first bearing is inherently preloaded since there is an attractive force between permanent magnet layer (9) of the rotor and the magnetic flux modulator layer of the stator. Therefore, during the assembly process, the balls are placed over the external surface of stator part (6) precisely. Once the balls are in place, the rotor (8) is moved in a controlled way down to its final position. For the second bearing assembly, the balls are placed in the rotor (8) bearing tracks (11) and then the whole assembly is closed by external cylindrical frame (7).

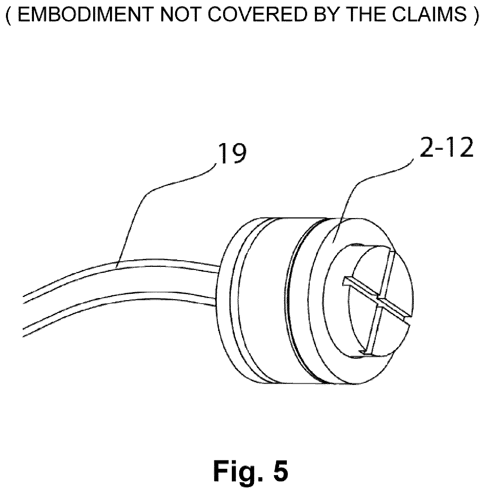

A second embodiment, which is not covered by the subject-matter of the claims, is shown in figure 5. This second embodiment includes similar layout of almost all the layers except the antenna layer. In this case, the antenna(s) is replaced by direct tethered powering of the actuator through two thin enameled copper wires (19). The main advantage of this second embodiment is that high, reliable, and continuous power flux can be provided to the actuator. However, this embodiment loses the wireless capacity, so this layout is best used when the actuator is attached to the end tip of a catheter externally manipulated.

Having thus described several illustrative embodiments of the present disclosure, those of skill in the art will readily appreciate that yet other embodiments may be made and used within the scope of the claims hereto attached. It will be understood, however, that this disclosure is, in many respects, only illustrative. Changes may be made in details, particularly in matters of shape, size, arrangement of parts, and exclusion and order of steps, without exceeding the scope of the disclosure. The disclosure's scope is, of course, defined in the language in which the appended claims are expressed.

### CITATION LIST

Patent list:
- NL9002624A
- JP2009247191A
- US2009031839A1
- KR920020811A
- CN110676985A
- CN109104059A
- CN103178667A
- US2019372341A1
- JP2016129479A
- CN106560981A
- KR102026289B1
- CN106451818A
- CN203225631U
- CN209593110U
- KR101749586B1
- CN103083049A

### Article list

- Diez-Jimenez, E., R. Sanchez-Montero, and M. Martinez-Muñoz. 2017. "Towards Miniaturization of Magnetic Gears: Torque Performance Assessment." Micromachines 9(1).
- Fujimoto, Hiroshi, and Motoki Sato. 2016. "Development of Wireless In-Wheel Motor." Journal of the Institute of Electrical Engineers of Japan 136(10):683-86.
- Gao, Jinyang, and Guozheng Yan. 2019. "Design and Implementation of a Clamper-Based and Motor-Driven Capsule Robot Powered by Wireless Power Transmission." IEEE Access 7:138151-61.
- Koser, Hur, and Jeffrey H. Lang. 2006. "Magnetic Induction Micromachine - Part I: Design and Analysis." Journal of Microelectromechanical Systems 15(2):415-26.
- Luo, Xiang, Shuangxia Niu, and W. N. Fu. 2016. "Design and Sensorless Control of a Novel Axial-Flux Permanent Magnet Machine for In-Wheel Applications." IEEE Transactions on Applied Superconductivity 26(7).
- Multiple-frequency, An L. C. C., Wei Liu, Student Member, Chunhua Liu, and Senior Member. 2019. "-Compensated Multiple-Frequency Wireless Motor System." 15(11):6023-34.
- Rallabandi, Vandana, Narges Taran, Dan M. lonel, and Ion G. Boldea. 2017. "Axial-Flux PM Synchronous Machines with Air-Gap Profiling and Very High Ratio of Spoke Rotor Poles to Stator Concentrated Coils." 2017 IEEE International Electric Machines and Drives Conference, IEMDC 2017 1-7.
- Waldschik, Andreas, and Stephanus Büttgenbach. 2010. "Micro Gear Pump with Internal Electromagnetic Drive." Microsystem Technologies 16(8-9):1581-87.
- Wang, Tianshi, Charles Lancée, Robert Beurskens, John Meijer, Bart Knapen, Antonius F. W. Van Der Steen, and Gijs Van Soest. 2014. "Development of a High-Speed Synchronous Micro Motor and Its Application in Intravascular Imaging." Sensors and Actuators, A: Physical 218:60-68.
- Wu, Fan, and Ayman M. El-Refaie. 2019. "Permanent Magnet Vernier Machine: A Review." IET Electric Power Applications 13(2):127-37.
- Zhang, Rui, Jian Li, Ronghai Qu, and Dawei Li. 2016. "A Novel Triple-Rotor Axial-Flux Vernier Permanent Magnet Machine." IEEE Transactions on Applied Superconductivity 26(7):1-5.
- Zou, Tianjie, Dawei Li, Ronghai Qu, Jian Li, and Dong Jiang. 2017. "Analysis of a Dual-Rotor, Toroidal-Winding, Axial-Flux Vernier Permanent Magnet Machine." IEEE Transactions on Industry Applications 53(3):1920-30.

## Claims

1. A rotary electromagnetic actuator comprising:
a stator layer (12) extending in a thickness direction between a top side and an opposing bottom side, the stator layer (12) configured to include a plurality of electromagnetic actuation coils (3) spaced axially around an axis of rotation of a rotor (8) with each oriented in the thickness direction;
a magnetic flux modulator layer (4) with a plurality of flux modulator teeth (5) arranged axially around the axis of rotation of the rotor, the magnetic flux modulator layer (4) is stacked with and fixed relative to the stator layer (12) to form a stacked stator assembly; and
an external frame (7);
the rotor (8) is aligned with the stator layer (12), the rotor (8) comprising a permanent magnet layer (9) with alternating multipolar magnetizations arranged axially around the axis of rotation of the rotor (8), wherein the rotor (8) is stacked on the stacked stator assembly and configured to rotate relative to the stacked stator assembly;
a second layer (2) including rectifier and power conditioning electronic circuit layers;
the actuator being **characterized in that** it also comprises:
a first bearing situated between the stacked stator assembly and the rotor (8), the first bearing including precision balls disposed directly in contact between a rigid frame of the magnetic flux modulator layer (4) acting as a bearing track (6) and a bearing track (11) provided in the rotor (8);
a second bearing situated between the rotor (8) and the external frame (7), the second bearing including precision balls disposed directly in contact between a bearing track (11) provided in the rotor (8) and the external cylindrical frame (7);
a first layer consisting of one or more power receiving antennas (1) for wirelessly receiving power for powering the rotary electromagnetic actuator during use; and
wherein the external frame (7), the magnetic flux modulator layer (4), the stator layer (12), the second layer (2) and the power receiving antennas (1) all have the same constant outer diameter, said diameter being smaller than 1mm.

2. The rotary electromagnetic actuator of claim 1, wherein the stator layer (12) includes the plurality of electromagnetic actuation coils (3) encapsulated in an epoxy filler.

3. The rotary electromagnetic actuator of claim 1, wherein each of the plurality of electromagnetic actuation coils (3) of the stator layer (12) comprises a plurality of stacked planar conductive loops (18) each formed on a separate insulating layer and interconnected to at least one adjacent conductive loop through one or more VIAS formed through an intervening insulating layer.

4. The rotary electromagnetic actuator of claim 3, wherein each of the plurality of electromagnetic actuation coils (3) is formed using an integrated circuit fabrication process.

5. The rotary electromagnetic actuator of claim 4, further comprising control electronic operatively coupled to the plurality of electromagnetic actuation coils (3), wherein at least some of the control electronics is formed on a semiconductor layer that is processed as part of the integrated circuit fabrication process.

6. The rotary electromagnetic actuator of any of claims 1-5, further comprising control electronics operatively coupled to the plurality of electromagnetic actuation coils (3), the control electronics provided in a circuit module that is stacked with the stacked stator assembly.

7. The rotary electromagnetic actuator of claim 1, wherein the one or more power receiving antennas (1) includes an induction coil (15).

8. The rotary electromagnetic actuator of claim 1, wherein the one or more power receiving antennas (1) includes a plurality of patch microwave antenna arrays.

9. The rotary electromagnetic actuator of claim 1, wherein the one or more power receiving antennas (1) includes a double helical antenna (16).

10. The rotary electromagnetic actuator of any of claims 1-9, wherein the permanent magnet layer (9) of the rotor (8) is magnetized in alternating north-south pole pairs, and wherein the difference of the number of pole pairs of the permanent magnet layer (9) and a number of flux modulator teeth (5) of the magnetic flux modulator layer (4) corresponds to a number of electromagnetic actuation coil pole-pairs.

11. The rotary electromagnetic actuator of any of claims 1-9, wherein the permanent magnet layer (9) of the rotor (8) is magnetized in single direction pole pairs with the pole pair made by one permanent magnet pole and one ferromagnetic pole-piece, and wherein the difference of the number of pole pairs of the permanent magnet layer and a number of flux modulator teeth of the magnetic flux modulator layer corresponds to a number of electromagnetic actuation coil pole-pairs.

12. The rotary electromagnetic actuator of any of claims 1-11, wherein each of the electromagnetic actuation coils (3) comprises a ferromagnetic inner core and a conducive winding about the ferromagnetic inner core.

## Patentansprüche

1. Elektromagnetischer Drehantrieb, umfassend:
eine Statorschicht (12), die sich in Dickenrichtung zwischen einer Oberseite und einer gegenüberliegenden Unterseite erstreckt, wobei die Statorschicht (12) dazu konfiguriert ist, eine Vielzahl von elektromagnetischen Betätigungsspulen (3) zu enthalten, die axial um eine Drehachse eines Rotors (8) beabstandet sind und jeweils in der Dickenrichtung orientiert sind;
eine magnetische Flussmodulatorschicht (4) mit einer Vielzahl von Flussmodulatorzähnen (5), die axial um die Drehachse des Rotors angeordnet sind, wobei die magnetische Flussmodulatorschicht (4) mit der Statorschicht (12) gestapelt und relativ zu dieser fixiert ist, um eine gestapelte Statorbaugruppe zu bilden; und
einen Außenrahmen (7);
wobei der Rotor (8) auf die Statorschicht (12) ausgerichtet ist, wobei der Rotor (8) eine Permanentmagnetschicht (9) mit abwechselnden multipolaren Magnetisierungen umfasst, die axial um die Drehachse des Rotors (8) angeordnet sind, wobei der Rotor (8) auf die gestapelte Statorbaugruppe gestapelt und dazu konfiguriert ist, sich relativ zu der gestapelten Statorbaugruppe zu drehen;
eine zweite Schicht (2), die Gleichrichter- und Leistungsaufbereitungselektronikschichten enthält;
wobei der Antrieb **dadurch gekennzeichnet ist, dass** er ferner Folgendes umfasst:
ein erstes Lager, das sich zwischen der gestapelten Statorbaugruppe und dem Rotor (8) befindet, wobei das erste Lager Präzisionskugeln enthält, die in direktem Kontakt zwischen einem starren Rahmen der magnetischen Flussmodulatorschicht (4), der als Lagerlaufbahn (6) dient, und einer im Rotor (8) bereitgestellten Lagerlaufbahn (11) angeordnet sind;
ein zweites Lager, das sich zwischen dem Rotor (8) und dem Außenrahmen (7) befindet, wobei das zweite Lager Präzisionskugeln enthält, die in direktem Kontakt zwischen einer im Rotor (8) bereitgestellten Lagerlaufbahn (11) und dem zylindrischen Außenrahmen (7) angeordnet sind;
eine erste Schicht, bestehend aus einer oder mehreren Leistungsempfangsantennen (1) zum drahtlosen Empfang von Leistung zur Versorgung des elektromagnetischen Drehantriebs während des Betriebs; und
wobei der Außenrahmen (7), die magnetische Flussmodulatorschicht (4), die Statorschicht (12), die zweite Schicht (2) und die Leistungsempfangsantennen (1) alle denselben konstanten Außendurchmesser aufweisen, wobei dieser Durchmesser kleiner als 1 mm ist.

2. Elektromagnetischer Drehantrieb nach Anspruch 1, wobei die Statorschicht (12) die Vielzahl von elektromagnetischen Betätigungsspulen (3) umfasst, die in einem Epoxidfüller eingekapselt sind.

3. Elektromagnetischer Drehantrieb nach Anspruch 1, wobei jede der Vielzahl von elektromagnetischen Betätigungsspulen (3) der Statorschicht (12) eine Vielzahl von gestapelten planaren leitfähigen Schleifen (18) umfasst, die jeweils auf einer separaten Isolierschicht ausgebildet und über mindestens eine VIAS, die durch eine dazwischenliegende Isolierschicht hindurch ausgebildet ist, mit mindestens einer benachbarten leitfähigen Schleife verbunden sind.

4. Elektromagnetischer Drehantrieb nach Anspruch 3, wobei jede von der Vielzahl von elektromagnetischen Betätigungsspulen (3) unter Verwendung eines Herstellungsverfahrens für integrierte Schaltungen ausgebildet ist.

5. Elektromagnetischer Drehantrieb nach Anspruch 4, ferner umfassend eine Steuerelektronik, die betriebsmäßig mit der Vielzahl von elektromagnetischen Betätigungsspulen (3) gekoppelt ist, wobei mindestens ein Teil der Steuerelektronik auf einer Halbleiterschicht ausgebildet ist, die als Teil des Herstellungsverfahrens für integrierte Schaltungen verarbeitet wird.

6. Elektromagnetischer Drehantrieb nach einem der Ansprüche 1-5, ferner umfassend eine Steuerelektronik, die betriebsmäßig mit der Vielzahl von elektromagnetischen Betätigungsspulen (3) gekoppelt ist, wobei die Steuerelektronik in einem Schaltungsmodul bereitgestellt ist, das mit der gestapelten Statorbaugruppe gestapelt ist.

7. Elektromagnetischer Drehantrieb nach Anspruch 1, wobei die eine oder die mehreren Leistungsempfangsantennen (1) eine Induktionsspule (15) enthalten.

8. Elektromagnetischer Drehantrieb nach Anspruch 1, wobei die eine oder die mehreren Leistungsempfangsantennen (1) eine Vielzahl von Patch-Mikrowellenantennenarrays enthalten.

9. Elektromagnetischer Drehantrieb nach Anspruch 1, wobei die eine oder die mehreren Leistungsempfangsantennen (1) eine Doppelspiralantenne (16) enthalten.

10. Elektromagnetischer Drehantrieb nach einem der Ansprüche 1-9, wobei die Permanentmagnetschicht (9) des Rotors (8) in abwechselnden Nord-Süd-Polpaaren magnetisiert ist und wobei die Differenz zwischen der Anzahl der Polpaare der Permanentmagnetschicht (9) und der Anzahl der Flussmodulatorzähne (5) der magnetischen Flussmodulatorschicht (4) einer Anzahl der Polpaare der elektromagnetischen Betätigungsspule entspricht.

11. Elektromagnetischer Drehantrieb nach einem der Ansprüche 1-9, wobei die Permanentmagnetschicht (9) des Rotors (8) in unidirektionalen Polpaaren magnetisiert ist, wobei das Polpaar aus einem Permanentmagnetpol und einem ferromagnetischen Polstück besteht, und wobei die Differenz zwischen der Anzahl der Polpaare der Permanentmagnetschicht und der Anzahl der Flussmodulatorzähne der magnetischen Flussmodulatorschicht einer Anzahl der Polpaare der elektromagnetischen Betätigungsspule entspricht.

12. Elektromagnetischer Drehantrieb nach einem der Ansprüche 1-11, wobei jede der elektromagnetischen Betätigungsspulen (3) einen ferromagnetischen Innenkern und eine leitfähige Wicklung um den ferromagnetischen Innenkern umfasst.

## Revendications

1. Actionneur électromagnétique rotatif comprenant :
une couche de stator (12) s'étendant dans le sens de l'épaisseur entre une face supérieure et une face inférieure opposée, la couche de stator (12) conçue pour comporter une pluralité de bobines d'actionnement électromagnétique (3) espacées axialement autour d'un axe de rotation d'un rotor (8), chacune étant orientée dans le sens de l'épaisseur ;
une couche de modulateur de flux magnétique (4) avec une pluralité de dents de modulateur de flux (5) agencées axialement autour de l'axe de rotation du rotor, la couche de modulateur de flux magnétique (4) est empilée et fixée par rapport à la couche de stator (12) pour former un ensemble stator empilé ; et
un cadre extérieur (7) ;
le rotor (8) est aligné avec la couche de stator (12), le rotor (8) comprenant une couche d'aimant permanent (9) avec des magnétisations multipolaires alternées agencées axialement autour de l'axe de rotation du rotor (8), dans lequel le rotor (8) est empilé sur l'ensemble stator empilé et conçu pour entrer en rotation par rapport à l'ensemble stator empilé ;
une seconde couche (2) comportant des couches de circuits électroniques de redressement et de conditionnement de puissance ;
l'actionneur étant **caractérisé en ce qu'**il comprend également :
un premier palier situé entre l'ensemble stator empilé et le rotor (8), le premier roulement comportant des billes de précision disposées directement en contact entre un cadre rigide de la couche de modulateur de flux magnétique (4) faisant office de piste de roulement (6) et une piste de roulement (11) prévue dans le rotor (8) ;
un second palier situé entre le rotor (8) et le cadre extérieur (7), le second roulement comportant des billes de précision disposées directement en contact entre une piste de roulement (11) prévu dans le rotor (8) et le cadre cylindrique externe (7) ;
une première couche constituée d'une ou plusieurs antennes de réception de puissance (1) permettant de recevoir sans fil de la puissance destinée à alimenter l'actionneur électromagnétique rotatif en cours d'utilisation ; et
dans lequel le cadre extérieur (7), la couche du modulateur de flux magnétique (4), la couche du stator (12), la seconde couche (2) et les antennes réceptrices de puissance (1) ont toutes le même diamètre extérieur constant, ledit diamètre étant inférieur à 1 mm.

2. Actionneur électromagnétique rotatif selon la revendication 1, dans lequel la couche de stator (12) comporte la pluralité de bobines d'actionnement électromagnétique (3) encapsulées dans une charge époxy.

3. Actionneur électromagnétique rotatif selon la revendication 1, dans lequel chacune de la pluralité de bobines d'actionnement électromagnétique (3) de la couche stator (12) comprend une pluralité de boucles conductrices planes empilées (18) chacune formée sur une couche isolante séparée et interconnectée à au moins une boucle conductrice adjacente à travers un ou plusieurs des trous d'interconnexion formés à travers une couche isolante intermédiaire.

4. Actionneur électromagnétique rotatif selon la revendication 3, dans lequel chacune de la pluralité de bobines d'actionnement électromagnétique (3) est formée à l'aide d'un processus de fabrication de circuit intégré.

5. Actionneur électromagnétique rotatif selon la revendication 4, comprenant en outre une électronique de commande couplée de manière opérationnelle à la pluralité de bobines d'actionnement électromagnétique (3), dans lequel au moins une partie de l'électronique de commande est formée sur une couche de semiconducteur qui est traitée dans le cadre du processus de fabrication de circuit intégré.

6. Actionneur électromagnétique rotatif selon l'une quelconque des revendications 1 à 5, comprenant en outre une électronique de commande couplée de manière opérationnelle à la pluralité de bobines d'actionnement électromagnétique (3), l'électronique de commande fournie dans un module de circuit qui est empilé avec l'ensemble stator empilé.

7. Actionneur électromagnétique rotatif selon la revendication 1, dans lequel la ou les antennes de réception de puissance (1) comporte une bobine d'induction (15).

8. Actionneur électromagnétique rotatif selon la revendication 1, dans lequel la ou les antennes de réception de puissance (1) comprend une pluralité de réseaux d'antennes micro-ondes à patch.

9. Actionneur électromagnétique rotatif selon la revendication 1, dans lequel la ou les antennes de réception de puissance (1) comportent une antenne hélicoïdale double (16).

10. Actionneur électromagnétique rotatif selon l'une quelconque des revendications 1 à 9, dans lequel la couche d'aimant permanent (9) du rotor (8) est magnétisée en paires de pôles nord-sud alternées, et dans lequel la différence entre le nombre de paires de pôles de la couche d'aimant permanent (9) et un nombre de dents de modulateur de flux (5) de la couche de modulateur de flux magnétique (4) correspond à un nombre de paires de pôles de la bobine d'actionnement électromagnétique.

11. Actionneur électromagnétique rotatif selon l'une quelconque des revendications 1 à 9, dans lequel la couche d'aimant permanent (9) du rotor (8) est magnétisée en paires de pôles à sens unique la paire de pôles étant constituée d'un pôle d'aimant permanent et d'une pièce de pôle ferromagnétique, et dans lequel la différence entre le nombre de paires de pôles de la couche d'aimant permanent et un nombre de dents de modulateur de flux de la couche de modulateur de flux magnétique correspond à un nombre de paires de pôles de la bobine d'actionnement électromagnétique.

12. Actionneur électromagnétique rotatif selon l'une quelconque des revendications 1 à 11, dans lequel chacune des bobines d'actionnement électromagnétique (3) comprend un noyau interne ferromagnétique et un enroulement conducteur autour du noyau interne ferromagnétique.
